(19) Europäisches Patentamt
European Patent Office
Office européen des brevets

(11) EP 4 722 317 A1

(12) **EUROPEAN PATENT APPLICATION**

(43) Date of publication:
**08.04.2026 Bulletin 2026/15**

(21) Application number: **24306630.5**

(22) Date of filing: **04.10.2024**

(51) International Patent Classification (IPC):
***C09J 123/14*** *(2006.01)*

(52) Cooperative Patent Classification (CPC):
(C-Sets available)
**C09J 123/14;** C08L 2205/025; C08L 2205/03;
C08L 2314/06 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Bostik SA**
**92800 Puteaux (FR)**

(72) Inventors:
- **LAFERTE, Olivier**
  **60280 VENETTE (FR)**
- **DUPLAGA, Urszula**
  **60280 VENETTE (FR)**
- **D'ARANJO, Aurélie**
  **60280 VENETTE (FR)**

(74) Representative: **Arkema Patent**
**Arkema France**
**DRD-DPI**
**51, Esplanade du Général de Gaulle**
**CS 10478**
**92907 Paris La Défense Cedex (FR)**

(54) **HOT MELT ADHESIVE COMPOSITION**

(57) The present invention relates to a hot melt adhesive composition comprising:
- a first non-amorphous single-site catalyzed polyolefin (PO1) having an average molecular weight ranging from 10 000 g/mol to 99 000 g/mol, and an enthalpy of fusion ranging from 30 J/g to 100 J/g;
- a second non-amorphous single-site catalyzed polyolefin (PO2) having an average molecular weight greater than or equal to 100 000 g/mol, and an enthalpy of fusion ranging from 8 J/g to 30 J/g;
- a wax having a drop melting point ranging from 70°C to 180°C;

wherein the composition has a loss percentage of melt enthalpy between initial and after ageing lower than 10%, wherein the composition is free of hydrogenated styrene block copolymer.

EP 4 722 317 A1

(52) Cooperative Patent Classification (CPC): (Cont.)

C-Sets
**C09J 123/14, C08L 23/14, C08L 23/06;**
**C09J 123/14, C08L 23/14, C08L 23/10**

## Description

### TECHNICAL FIELD

The present invention relates to a hot melt adhesive composition and its uses, a method for bonding substrates and an article.

### TECHNICAL BACKGROUND

Hot melt adhesives (HM adhesives) are substances which are solid at room temperature and which comprise neither water nor solvent. They are applied in the molten state after heating to a temperature generally of between 120 and 250°C, most often between 130 and 180°C, and solidify during cooling, thus forming a seal (or adhesive joint) which ensures the attachment of the two substrates to be assembled. Hot melt adhesives are generally provided in the form of compositions which comprise a thermoplastic polymer and optionally a tackifying resin and a plasticizer. There also exist hot melt pressure sensitive adhesives (HMPSA) which are substances conferring an immediate tackiness property (also called "*tack*") to a substrate coated with such adhesive which allows its instantaneous adhesion to another substrate under a slight and brief pressure, at room temperature.

Disposable hygiene articles are made from a wide variety of substrates (non-woven, elastomeric material, film, such as polyolefin film and in particular polyethylene or polypropylene film) bonded with adhesive materials. Among examples of disposable hygiene articles, mention may be made of diapers, napkins or adult incontinence disposable articles. The disposable hygiene articles are produced at high speed line rates. In such production, hot melt adhesives are typically used because they can be easily applied to substrates (at the molten state) and rapidly develop strong bond upon cooling, without any additional manufacturing steps such as solvent removal.

Several kinds of hot melt adhesives can be found in disposable hygiene articles, depending on their emplacement and final function, such as:

- Core adhesives: used to keep in place the diaper core (fluff and SuperAbsorbentPolymer "SAP"), during the manufacture of the diaper but also during the use of the diaper mainly after that said diaper has been wet.
- Construction adhesives: which bind the polyethylene back sheet to the nonwoven substrates or which bind two nonwoven substrates.
- Elastic adhesives: used to bind elastic material (such as for example polyurethane based strands) to sheet-like substrates (such as for example polyethylene "PE" or to polypropylene "PP" and Nonwoven substrates).

In particular, in elastic attachment applications, the adhesive should maintain the elastic material in place, particularly when solicited during manufacturing and use of the disposable hygiene article. Indeed, during the manufacture process, the elastic material (for example a set of elastic strands) is usually first stretched prior to bonding and then the adhesive is applied onto the elastic material, either by non-contact (spraying) or contact applications, then the elastic material coated with the adhesive are quickly laminated between two sheet-like substrates (for example a nonwoven substrate and a polyolefin film). After that, the elastic material is permitted to relax, creating a gathered (or rushed) laminate having substantial flexibility. The adhesive thus needs to present high cohesion and elasticity to be resistant enough to creep strength. Moreover, in order to avoid any adhesive failure, good adhesion on the elastic material is also recommended.

Many conventional hot melt adhesives for elastic applications are based on styrene block copolymers. However, in order to apply these adhesives at an appropriate temperature and viscosity, the polymer content is minimized in favor of high levels of tackifiers and plasticizers. Large additions of tackifiers and plasticizers may negatively affect the performance of the elastic adhesive upon ageing. Hot melt which are polyolefin based have been explored for use in elastic applications but its use has been limited in view of lack of balance in cohesive /adhesive strength. Typically, even if these hot melt adhesives reach good initial creep resistance, that creep resistance is usually dramatically reduce after thermal ageing, resulting in an adhesive that can no longer hold strands in place.

There is thus a need for new hot melt adhesives that allows to resolve at least a part of the above-mentioned drawbacks.

There is a need for providing a hot melt adhesive composition exhibiting good adhesion properties on a variety of substrate materials and fabrics, and maintain elastic performance features even after thermal ageing (for example after 1 month at 55°C).

There is a need for providing an environment-friendly hot melt adhesive composition exhibiting a good compromise between low creep of elastic strand (initial and after thermal ageing), good adhesive properties, and good cohesive strength.

DESCRIPTION OF THE INVENTION

## A. Hot melt adhesive composition

The term "hot melt" is used herein to describe that the adhesive composition is solid at ambient temperature (e.g. 18°C to 25°C) and requires to be heated to melt and then be applied on a substrate. The adhesive composition according to the invention is generally in a molten state at a temperature of at least 115°C, preferably at least 130°C.

The present invention relates to a hot melt adhesive composition comprising:

- a first non-amorphous single-site catalyzed polyolefin (PO1) having an average molecular weight ranging from 10 000 g/mol to 99 000 g/mol, and an enthalpy of fusion ranging from 30 J/g to 100 J/g;
- a second non-amorphous single-site catalyzed polyolefin (PO2) having an average molecular weight greater than or equal to 100 000 g/mol, and an enthalpy of fusion ranging from 8 J/g to 30 J/g;
- a wax having a drop melting point ranging from 70°C to 180°C;

wherein the composition has a loss percentage of melt enthalpy between initial and after ageing lower than 10%, wherein the composition is free of hydrogenated styrene block copolymer.

The PO1 and PO2 are non-amorphous because they show a melting point on their DSC (Differential Scanning Calorimetry) curve, and possesses an enthalpy of fusion higher than 8 J/g.

In the present text, the melting point and enthalpy of fusion (also called heat of fusion or melt enthalpy) is determined by DSC where a sample (for example about 10 mg) is heated from -70°C to 200°C at 10°C/min.

Preferably, the hot melt adhesive composition is free of amorphous polyolefin having an average number molecular weight (Mn) higher than 6000 g/mol.

Even more preferably, the hot melt adhesive composition is free of amorphous polyolefin having an average number molecular weight (Mn) higher than 3000 g/mol.

The amorphous polyolefin is not a single-site catalyzed polyolefin (i.e. is not obtained by single-site catalysis). The amorphous polyolefin is typically obtained by a Ziegler-Natta polymerization process (for example with a pair of catalyst and co-catalyst such as $TiCl_3$ and $Al(C_2H_5)_2Cl$, or $TiCl_4$ with $Al(C_2H_5)_3$).

As defined herein, an amorphous polyolefin is a polyolefin having an enthalpy of fusion of less than 8 J/g (when the polyolefin is completely amorphous, it is considered that its enthalpy of fusion is equal to 0 J/g), preferably less than 6 J/g.

Thus when the composition of the invention is free of amorphous polyolefin having an average number molecular weight (Mn) higher than 6000 g/mol, said amorphous polyolefin is an amorphous non single-site catalyzed polyolefin which has an enthalpy of fusion of less than 8 J/g and an average number molecular weight higher than 6000 g/mol.

Hydrogenated styrene block copolymers are well known, and typically include styrene-ethylene-butylene-styrene (SEBS), styrene-ethylene-butylene (SEB), styrene-ethylene-propylene-styrene (SEPS), styrene-ethylene-propylene (SEP), styrene-ethylene-ethylene-propylene-styrene (SEEPS).

The hot melt adhesive composition according to the invention comprises non-amorphous single-site catalyzed polyolefins, i.e. polyolefins obtained by single-site catalysis polymerization. Single-site catalysis has been widely used on industrial scale. Each catalyst molecule has only a single active transition metal site and the activity at this metal site is therefore identical for all the catalyst molecules. The single-site catalyst may be a metallocene catalyst and/or a non-metallocene catalyst.

Preferably, the non-amorphous single-site catalyzed polyolefins are non-amorphous metallocene-catalyzed polyolefins. The catalyst is typically a transition metal complex having a metal atom situated between one or two cyclic organic ligands; the ligands being the same or different derivatives of cyclopentadiene. A co-catalyst may be implemented to activate a metallocene catalyst by converting a metallocene complex to a catalytically active species and an example of such compound is aluminoxane preferably methylaluminoxane having an average degree of oligomerization of from 4 - 30. Nonetheless, other neutral or ionic co-catalysts can be used, for example organic boron compounds such as tetra(n-butyl) ammonium tetrakis(pentafluorophenyl) borate, dimethylanilinium tetrakis(pentafluorophenyl) borate and/or trityl tetrakis(pentafluorophenyl) borate.

As an example of a non-metallocene catalyst, mention may be made of a catalytic metal (preferably a transition metal) complexed with a polydentate organic ligand, such as described in WO2017/058981, for example:

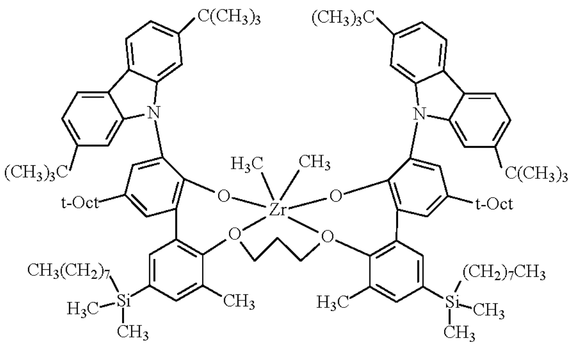

First non-amorphous single-site catalyzed polyolefin (PO1)

The hot melt adhesive composition according to the invention comprises a first non-amorphous single-site catalyzed polyolefin (PO1) having an average molecular weight ranging from 10 000 g/mol to 99 000 g/mol, and an enthalpy of fusion ranging from 30 J/g to 100 J/g.

Preferably, PO1 is metallocene-catalyzed.

As used herein, the word "a" or "an" means one or more.

The PO1 may be a homopolymer or a copolymer, preferably a copolymer.

By "copolymer", it is intended a polymer comprising at least two different repeating units.

The PO1 may be obtained by polymerizing one or more alpha-olefin monomers.

In the present text, "alpha-olefin" designates an alkene of formula $C_nH_{2n}$ (n corresponding to the number of carbon atoms), which has a carbon-carbon double bond at the first carbon atom (alpha-carbon).

For example, the alpha-olefin monomer may be ethylene, propylene, 1-butene, 2-methyl-1-propene (isobutylene), 1-pentene, 3-methyl-1-butene, 3-methyl-1-pentene, 1-hexene, 1-heptene and/or 1-octene.

Preferably, the PO1 is a homopolymer or copolymer of propylene, more preferably a copolymer of propylene. For example, the PO1 may comprise more than 60 % by weight of propylene units with respect to the weight of the PO1, preferably more than 70 % by weight, more preferably more than 80 % by weight, even more preferably more than 85 % by weight.

When the PO1 is a copolymer of propylene, the other monomer(s) constituting said copolymer may be selected from ethylene, 1-butene, 2-methyl-1-propene, 1-pentene, 3-methyl-1-butene, 3-methyl-1-pentene, 1-hexene, 1-heptene, 1-octene, and mixtures thereof. Preferably, at least one of the other monomer(s) is ethylene, more preferably the other monomer is only ethylene. For example, the PO1 may comprise between 1 % and 40 % by weight of ethylene units with respect to the weight of the PO1, preferably between 2 % and 30 % by weight, more preferably between 4 % and 20 % by weight, even more preferably between 6 % and 15 % by weight.

In the present text, the weight percentages of the monomer units (e.g. propylene, ethylene, etc.) constituting a polymer can be determined by the skilled person, for example by $^1H$ NMR (Nuclear Magnetic Resonance).

Preferably, PO1 is a copolymer of ethylene and propylene comprising more than 60 % by weight of propylene units and between 1 % and 40 % by weight of ethylene units with respect to the weight of the PO1, preferably more than 70 % by weight of propylene units and between 2 % and 30 % by weight of ethylene units, more preferably more than 80 % by weight of propylene units and between 4 % and 20 % by weight of ethylene units, even more preferably more than 85 % by weight of propylene units and between 6 % and 15 % by weight of ethylene units.

The PO1 has preferably a weight average molecular weight ranging from 10 000 g/mol to 75 000 g/mol, more preferably from 10 000 g/mol to 50 000 g/mol, and even more preferably from 10 000 g/mol to 30 000 g/mol.

The weight average molecular weight may be measured by size exclusion chromatography (SEC), for example with a polystyrene calibration. For example, 1,2,4 trichlorobenzene can be used as the eluent, the temperature can be about 170°C, and the chromatography can be equipped with a differential refractive index detector (DRI) and an online light scattering (LS) detector.

The polydispersity index of the PO1 may be comprised between 1 and 4, preferably between 2 and 3. The polydispersity index corresponds to the weight average molecular weight divided by the number average molecular weight.

The PO1 has preferably an enthalpy of fusion ranging from 30 J/ to 80 J/g, more preferably from 32 J/g to 60 J/g, even more preferably from 35 J/g to 50 J/g.

The PO1 may have a melting point comprised between 30°C and 170°C, preferably between 60°C and 150°C, more preferably between 80°C and 120°C.

The PO1 may have a viscosity at 190°C between 800 mPa.s and 15 000 mPa.s, preferably between 1 000 mPa.s and 8 000 mPa.s, more preferably between 1 000 mPa.s and 6 000 mPa.s. The viscosity may be measured according to

ASTM D3236, in particular with a Brookfield apparatus.

Unless otherwise stated, standards mentioned throughout the present application are those in effect on the date the application is filed.

The PO1 content in the hot melt adhesive composition according to the invention may range from 8 % to 50 % by weight with respect to the total weight of the hot melt adhesive composition, preferably from 10 % to 40 % by weight, more preferably from 10 % to 25 % by weight.

Commercial examples of polyolefin PO1 are Vistamaxx®8880 from Exxon or Licocene®PP2502 from Clariant.

Second non-amorphous single-site catalyzed polyolefin (PO2)

The hot melt adhesive composition according to the invention comprises a second non-amorphous single-site catalyzed polyolefin (PO2) having an average molecular weight greater than or equal to 100 000 g/mol, and an enthalpy of fusion ranging from 8 J/g to 30 J/g.

Preferably, PO2 is metallocene-catalyzed.

The PO2 may be a homopolymer or a copolymer, preferably a copolymer.

The PO2 may be obtained by polymerizing one or more alpha-olefin monomers, for example, ethylene, propylene, 1-butene, 2-methyl-1-propene, 1-pentene, 3-methyl-1-butene, 3-methyl-1-pentene, 1-hexene, 1-heptene and/or 1-octene.

Preferably, the PO2 is a homopolymer or copolymer of propylene, more preferably a copolymer of propylene. For example, the PO2 may comprise more than 60 % by weight of propylene units with respect to the weight of the PO2, preferably more than 70 % by weight, more preferably more than 80 % by weight, even more preferably more than 85 % by weight.

When the PO2 is a copolymer of propylene, the other monomer(s) constituting said copolymer may be selected from ethylene, 1-butene, 2-methyl-1-propene, 1-pentene, 3-methyl-1-butene, 3-methyl-1-pentene, 1-hexene, 1-heptene, 1-octene, and mixtures thereof. Preferably, at least one of the other monomer(s) is ethylene, more preferably the other monomer is only ethylene. For example, the PO2 may comprise between 1 % and 40 % by weight of ethylene units with respect to the weight of the PO2, preferably between 2 % and 30 % by weight, more preferably between 4 % and 20 % by weight, even more preferably between 6 % and 15 % by weight.

Preferably, the PO2 is a copolymer of ethylene and propylene comprising more than 60 % by weight of propylene units and between 1 % and 40 % by weight of ethylene units with respect to the weight of the PO2, preferably more than 70 % by weight of propylene units and between 2 % and 30 % by weight of ethylene units, more preferably more than 80 % by weight of propylene units and between 4 % and 20 % by weight of ethylene units, even more preferably more than 85 % by weight of propylene units and between 6 % and 15 % by weight of ethylene units.

The number average molecular weight of the PO2 may be at least 1.5 times higher than the number average molecular weight of the PO1, preferably at least 2 times higher, more preferably at least 2.5 times higher. For example, the number average molecular weight of the PO2 may be between 1.5 times and 5 times higher than the number average molecular weight of the PO1, preferably between 2 times and 4 times higher, more preferably between 2.5 times and 3 times higher.

The weight average molecular weight may be measured by size exclusion chromatography (SEC), for example with a polystyrene calibration. For example, 1,2,4 trichlorobenzene can be used as the eluent, and the temperature can be about 170°C, and the chromatograph can be equipped with a differential refractive index detector (DRI) and an online light scattering (LS) detector.

The polydispersity index of the PO2 may be comprised between 1 and 4, preferably between 2 and 3. The polydispersity index corresponds to the weight average molecular weight divided by the number average molecular weight.

The PO2 has preferably an enthalpy of fusion ranging from 8 J/g to 20 J/g, even more preferably from 9 J/g to 15 J/g.

The PO2 may have a melting point comprised between 30°C and 170°C, preferably between 40°C and 100°C, more preferably between 50°C and 70°C.

The PO2 may have a melt index at 190°C and 2.16 kg between 1 g/10 min and 50 g/10 min, preferably between 5 g/10 min and 40 g/10 min, more preferably between 8 g/10 min and 30 g/10 min. The melt index may be measured according to ASTM D1238.

The PO2 content in the hot melt adhesive composition according to the invention preferably ranges from 8 % to 50 % by weight with respect to the total weight of the hot melt adhesive composition, more preferably from 10% to 40 % by weight, even more preferably from 15% to 30% by weight.

In the hot melt adhesive composition, the weight ratio PO1 : PO2 may range from 9 : 1 to 1 : 9, preferably from 4 : 6 to 6 : 4.

The total amount of the sum of PO1 and PO2 in the hot melt adhesive composition is preferably greater than or

equal to 20 wt%, more preferably greater than or equal to 30 wt% based on the total weight of said hot melt. Even more preferably, the total amount of the sum of PO1 and PO2 ranges from 35 wt% to 80 wt%.

Wax

The hot melt adhesive composition comprises a wax having a drop melting point ranging from 70°C to 180°C, preferably ranging from 72°C to 160°C, more preferably from 80°C to 160°C.

A wax typically has an average weight molecular weight lower than or equal to 3000 g/mol, more preferably lower than 2 000 g/mol.

The drop melting point of the wax may be measured according to ASTM D127.

The wax may be a paraffin wax, a Fischer-Tropsch wax, a polyolefin wax, an EVA wax, a natural wax (such as carnauba wax, rice wax, beeswax, etc.), or mixtures thereof.

By "paraffin wax", it is intended a wax derived from crude oil. It generally consists of a complex mixture of hydrocarbons. Paraffin waxes often contain a majority of straight-chain hydrocarbons, and can also contain branched hydrocarbons such as isoparaffins and other branched materials, and cycloalkanes such as cycloparaffins and other cyclocontaining materials. Paraffin waxes are characterized by a clearly defined crystal structure.

By "Fischer-Tropsch wax", it is intended a wax obtained by the so-called Fischer-Tropsch process. The Fischer-Tropsch process includes converting a synthesis gas comprising mainly hydrogen and carbon monoxide to hydrocarbons. The conversion is effected by contacting the synthesis gas with a Fischer-Tropsch catalyst, usually an iron or cobalt based catalyst, in a fixed bed or a slurry bed reactor under either low or high temperature Fischer-Tropsch operating conditions. In this manner, a mixture of hydrocarbons having different boiling ranges is obtained. The Fischer-Tropsch wax is then recovered, e.g. by means of distillation, from this hydrocarbon mixture. The Fischer-Tropsch wax typically has a composition wherein about 80% by volume thereof has a boiling point higher than 550°C atmospheric equivalent temperature ("AET").

By "polyolefin wax", it is intended a polyolefin homopolymer or copolymer wax, preferably polyethylene and/or polypropylene polymer wax. As examples of commercially available polyolefin waxes, mention may be made of "A-C®" waxes sold by Honeywell.

By "EVA wax", it is intended oligomeric polymer compounds that are prepared via a process comprising the co-polymerization of ethylene and vinyl acetate monomers and that have typically the following properties: (a) solid at room temperature (e.g. 23°C); (b) low melting point (e.g. less than 100°C); and (c) insoluble in water. The EVA copolymers of the EVA wax may be functionalized or modified in any possible manner.

The wax is preferably non-acid modified. By "acid-modified", it is intended comprising at least one carboxylic acid group (-C(O)OH) and/or carboxylic anhydride group.

The wax may have a kinematic viscosity at 130°C of less than 500 $mm^2/s$, preferably less than 100 $mm^2/s$, more preferably less than 50 $mm^2/s$. Such kinematic viscosity may be measured according to ASTM D445.

Preferably, the wax is a polyolefin wax or a Fischer-Tropsch wax.

The wax content in the hot melt adhesive composition according to the invention may range from 1 % to 15 % by weight with respect to the total weight of the hot melt adhesive composition, preferably from 2 % to 10 % by weight, more preferably from 2 % to 8 % by weight.

Tackifying resin

Advantageously, the hot melt adhesive composition according to the invention further comprises a tackifying resin.

The tackifying resin may be selected from:

- natural and modified rosin, such as gum rosin, wood rosin, tall-oil rosin, distilled rosin, hydrogenated rosin, dimerized rosin, polymerized rosin,
- esters of natural and modified rosins, in particular glycerol and pentaerythritol esters, such as glycerol esters of pale wood rosin, glycerol esters of polymerized rosin, pentaerythritol esters of pale wood rosin, pentaerythritol esters of tall oil rosin, phenolic modified pentaerythritol esters of rosin,
- polyterpene resins, generally resulting from the polymerization of terpene hydrocarbons, such as the monoterpene known as pinene, in the presence of Friedel-Crafts catalysts preferably at moderately low temperatures (e.g. about 20°C-50°C),
- copolymers of terpene with a diene monomer, preferably an aromatic diene monomer such as a styrene monomer (e.g. styrene, methylstyrene, etc),
- phenolic-modified terpene resins, such as those resulting from the condensation, in an acidic medium, of a terpene and a phenol,

- aliphatic petroleum hydrocarbon resins (C5), resulting from the polymerization of C5-hydrocarbon monomers,
- aromatic petroleum hydrocarbon resins (C9), resulting from the polymerization of C9-hydrocarbon monomers,
- petroleum hydrocarbon resins (C5/C9), resulting from the polymerization of a blend of aliphatic C5- and aromatic C9-hydrocarbon monomers,
- dicyclopentadiene petroleum resins (DCPD), resulting from the polymerization of dicyclopentadiene monomers optionally in mixture with aromatic C9-hydrocarbon monomers and/or aliphatic C5-hydrocarbon monomers,
- their corresponding hydrogenated derivatives (resulting from a subsequent total or partial hydrogenation thereof), and
- mixtures thereof.

As examples of C5-hydrocarbon monomers useful to prepare the aliphatic petroleum C5-hydrocarbon resin or the petroleum C5/C9-hydrocarbon resin, mention may be made of trans-1,3-pentadiene, cis-1,3-pentadiene, 2-methyl-2-butene, cyclopentadiene, methylcyclopentadiene and/or cyclopentene.

As examples of C9-hydrocarbon monomers useful to prepare the aromatic petroleum C9-hydrocarbon resin, the petroleum C5/C9-hydrocarbon resin or the DCPD resin, mention may be made of vinyltoluene, indene, methylstyrene, $\alpha$-methylstyrene, styrene and/or methylindene.

Preferably, the tackifying resin is selected from:

- aliphatic petroleum hydrocarbon resins (C5), resulting from the polymerization of C5-hydrocarbon monomers,
- aromatic petroleum hydrocarbon resins (C9), resulting from the polymerization of C9-hydrocarbon monomers,
- petroleum hydrocarbon resins (C5/C9), resulting from the polymerization of a blend of aliphatic C5- and aromatic C9-hydrocarbon monomers,
- dicyclopentadiene petroleum resins (DCPD), resulting from the polymerization of dicyclopentadiene monomers optionally in mixture with aromatic C9-hydrocarbon monomers and/or aliphatic C5-hydrocarbon monomers,
- their corresponding hydrogenated derivatives (resulting from a subsequent total or partial hydrogenation thereof), and
- mixtures thereof.

More preferably, the tackifying resin is selected from:

- aliphatic petroleum hydrocarbon resins (C5), resulting from the polymerization of C5-hydrocarbon monomers,
- dicyclopentadiene petroleum resins (DCPD), resulting from the polymerization of dicyclopentadiene monomers optionally in mixture with aliphatic C5-hydrocarbon monomers,
- their corresponding hydrogenated derivatives (resulting from a subsequent total or partial hydrogenation thereof), and
- mixtures thereof.

According to a preferred embodiment, the tackifying resin is hydrogenated (totally or partially).

The tackifying resin may have a softening point comprised between 20°C and 160°C, preferably between 85°C and 130°C. The softening point can be measured by a ring and ball method, for example according to ASTM E28.

The total content of the tackifying resin in the hot melt adhesive composition according to the invention may range from 20 % to 70 % by weight with respect to the total weight of said composition, preferably from 30 % to 60 % by weight, more preferably from 40 % to 60 % by weight.

<u>Plasticizer</u>

Advantageously, the hot melt adhesive composition according to the invention further comprises a plasticizer.

The plasticizer may be selected from naphthenic oils, paraffinic oils, olefin plasticizers, and mixtures thereof, preferably from naphthenic oils, paraffinic oils, and mixtures thereof.

Naphthenic and paraffinic oils are petroleum based oils which consists in a mixture of naphthenic hydrocarbons (e.g. aliphatic, saturated or unsaturated, C4 to C7-member hydrocarbon rings, preferably aliphatic, saturated or unsaturated, C4 to C6-member rings, including cycloalkanes such as cyclopentane, cyclohexane, cycloheptane), paraffinic hydrocarbons (saturated, linear or branched, alkanes) and aromatic hydrocarbons (aromatic hydrocarbon rings, which may be monocyclic or polycyclic; preferably aromatic C6-member hydrocarbon rings).

The classification of naphthenic and paraffinic oil is made based on the amount of each type of hydrocarbons in the oil. Typically, paraffinic oils have a paraffinic hydrocarbon content of at least 50% by weight with respect to the total weight of the paraffinic oil, and naphthenic oils have a naphthenic hydrocarbon content between 30% and 40% by weight, with respect to the total weight of the naphthenic oil.

As examples of naphtenic oil plasticizers, mention may be made of Calsol 5550 (by CALUMET).

By "olefin plasticizers", it is intended polyolefins having a viscosity at 190°C of less than 300 mPa.s, preferably less than 150 mPa.s.

Olefin plasticizers generally have a low weight average molecular weight, preferably between about 100 g/mol and about 10000 g/mol. The weight average molecular weight can be measured as indicated above (by size exclusion chromatography, preferably with a polystyrene calibration).

As examples of olefin plasticizers, mention may be made of Indopol® H300 (by INEOS), Glissopal® V640 (by BASF), PB1300 (by DAELIM).

The total content of the plasticizer in the hot melt adhesive composition according to the invention is preferably lower than or equal to 15% by weight with respect to the total weight of said composition, more preferably from 2% to 9 % by weight.

Other additives

The hot melt adhesive composition according to the invention may further comprise one or more additives selected from ultraviolet (UV) stabilizers (or antioxidants), fillers, surfactants, crosslinking agent, fire-retardant mineral or organic agents, pigments, fluorescent agents, and mixtures thereof, in particular from UV stabilizers.

The total content of additives in the composition according to the invention may be up to 20 % by weight with respect to the total weight of the composition, preferably between 0.1 % and 15 % by weight.

These optional other additives are well known in this art.

Advantageously, the hot melt adhesive composition according to the invention further comprises a UV stabilizer (or antioxidant). UV stabilizers are typically introduced to protect the composition from degradation resulting from reaction with oxygen which is likely to be formed by the action of heat or light. These compounds may include antioxidants capable of scavenging free radicals.

Examples of UV stabilizers are benzotriazoles, benzophenones, hindered amines (also named HALS for "hindered amine light stabilizers"), hindered phenols and multifunction phenols (such as sulfur and phosphorous-containing phenols and derivatives thereof), preferably hindered phenols.

Representative hindered amines include bis(1-octyloxy-2,2,6,6-tetramethyl-4-piperidyl)sebacate, bis(2,2,6,6-tetramethyl-4-piperidyl)sebacate, bis(1,2,2,6,6-pentamethyl-4-piperidyl)sebacate (CAS: 41556-26-7), methyl 1,2,2,6,6-pentamethyl-4-piperidyl sebacate (CAS: 82919-37-7) and/or or 4,4'-bis($\alpha$,$\alpha$-dimethylbenzyl)diphenylamine.

Hindered phenols are well known to those skilled in the art and may be characterized as phenolic compounds that also contain sterically bulky radicals in close proximity to the phenolic hydroxyl group thereof. In particular, tertiary butyl groups generally are substituted onto the benzene ring in at least one of the ortho positions relative to the phenolic hydroxyl group. Representative hindered phenols and multifunction phenols include: 1,3,5-trimethyl-2,4,6-tris(3-5-di-tert-butyl-4-hydroxybenzyl) benzene, pentaerythritol tetrakis[3-(3,5-di-tert-butyl-4-hydroxyphenyl)propionate], n-octadecyl-3(3,5-di-tert-butyl-4-hydroxyphenyl) propionate, 4.4'-methylenebis(4-methyl-6-tert-butylphenol), 4,4'-thiobis(6-tert-butyl-o-cresol), 2,6-di-tert-butylphenol, 6-(4-hydroxyphenoxy)-2,4-bis(n-octylthio)-1,3,5-triazine, 2,3,6-tris(4-hydroxy-3,5-di-tert-butyl-phenoxy)-1,3,5-triazine, di-n-octadecyl-3,5-di-tert-butyl-4-hydroxybenzyl-phosphonate, 2-(n-octyl-thio)ethyl-3,5-di-tert-butyl-4-hydroxybenzoate, sorbitol hexa-3(3,5-di-tert-butyl-4-hydroxy-phenyl)propionate, 2,2'-methylene bis(4-methyl-6-tert-butylphenol)phosphites, tris-(p-nonylphenyl)-phosphite (TNPP), bis(2,4-di-tert-butylphenyl)4,4'-diphenylenediphosphonite, tris(2,4-di-tert-butylphenyl) phosphite and/or tris(2,4-di-tert-butylphenyl)phosphate.

Suitable antioxidants include those commercially available under the tradenames Irganox® 1010 (tetrakis(methylene(3,5-di-ter-butyl-4-hydroxyhydrocinnamate)) methane), Irgafos® 168 (tris(2,4-ditert-butylphenyl)phosphate) and Irganox® PS800 (propanoic acid, 3,3'-thiobis-1,1'-didodecyl ester) from BASF, Chinox® 1010 (pentaerythritol tetrakis(3-(3,5-di-tert-butyl-4-hydroxyphenyl) propionate)) from Shuangjian, Evernox® 1010 and Everfos® 168 from Everspring Chemical, Songnox® 10 and 1680 from Songwon.

The UV stabilizer (or antioxidant) content may be between 0.1 % and 5 % by weight with respect to the total weight of the hot melt adhesive composition according to the invention, preferably between 0.3 % and 3 % by weight.

Composition

Preferably, the hot melt adhesive composition is free of styrene block copolymer.

The hot melt adhesive composition has a loss percentage of melt enthalpy, between initial and after ageing lower than 10%, preferably lower than 8%.

As used herein, the expression "melt enthalpy" corresponds to the energy absorbed by the hot melt to transition from crystalline state to its molten state during the first heating.

In the present text, the melt enthalpy of the hot melt adhesive is determined by DSC where a sample of 10 mg is heated (a first heat) from -70°C to 200°C at 10°C/min. The Loss percentage of melt enthalpy is calculated as follows:

% Loss of melt enthalpy = [(Initial melt enthalpy-Aged melt enthalpy)/Initial melt enthalpy] * 100

wherein:

- the initial melt enthalpy corresponds to the melt enthalpy measured by DSC on a sample not being submitted to the ageing test (explained below);
- the aged melt enthalpy corresponds to the melt enthalpy measured by DSC on a sample which has been submitted to the ageing test: at 55°C for 4 weeks in an oven at 55% Relative Humidity (±5%), then let 24h at 23°C at 55% Relative Humidity (±5%), then 1 hour at 38°C at 55% Relative Humidity (±5%), removed from the oven, left cooling down at 23°C and 55% Relative Humidity (±5%) for 30 minutes before to perform the DSC analysis.

The loss percentage of melt enthalpy of the hot melt adhesive is preferably determined as disclosed in the experimental part.

The hot melt adhesive composition may have a Brookfield viscosity at 177°C of from about 1000 to about 20 000 mPa.s, preferably from about 3000 to about 10 000 mPas, and more preferably from about 5000 to about 7000 mPas. The Brookfield viscosity may be measured according to the standard method ASTM D-3236, using a Brookfield viscometer of the type Spindle 27, at a temperature of about 177°C.

A preferred hot melt adhesive composition comprises:

- a first non-amorphous single-site catalyzed polyolefin (PO1) having an average molecular weight ranging from 10 000 g/mol to 30 000 g/mol, and an enthalpy of fusion ranging from 32 J/g to 60 J/g;
- a second non-amorphous single-site catalyzed polyolefin (PO2) having an average molecular weight greater than or equal to 100 000 g/mol, and an enthalpy of fusion ranging from 8 J/g to 20 J/g;
- from 2% to 8% of a wax having a drop melting point ranging from 70°C to 180°C;
- from 20% to 70% by weight of a tackifier resin;
- from 2% to 9% by weight of a plasticizer;

wherein the composition has a loss percentage of melt enthalpy between initial and after ageing lower than 10%,
wherein the composition is free of hydrogenated styrene block copolymer,
wherein the composition is free of amorphous polyolefin having an average number molecular weight (Mn) higher than 3000 g/mol,
wherein the total amount of the sum of PO1 and PO2 is greater than or equal to 30wt%.

The hot melt adhesive composition of the invention exhibits advantageously at least one of the following features:

- an initial elastic creep lower than or equal to 8% (in particular for a 15-25 mg/m/strand)
- an elastic creep after ageing of the hot melt at 55°C during 1 month lower than or equal to 15%, more preferably lower than or equal to 11% (in particular for a 15-25 mg/m/strand),
- good adhesive properties,
- good cohesive strength.

The creep is preferably measured as described in the experimental part.

The hot melt adhesive composition according to the invention can be prepared by mixing its ingredients under heat, preferably at a temperature ranging from 140°C to 180°C and atmospheric pressure.

**B. Use of the hot melt adhesive composition**

The present invention also relates to the use of a hot melt adhesive composition as described above, in a variety of other applications and constructions, for example forming permanent bonds, medical dressings (e.g. wound care products), bandages, surgical pads, drapes, gowns, filters, and combinations thereof.

The present invention also relates to the use of the hot melt adhesive composition as defined above, as, construction adhesive, core adhesive or elastic attachment adhesive, more preferably as elastic attachment adhesive.

The present invention relates to the use of the hot melt adhesive composition as defined above for bonding substrates.

The present invention more particularly relates to the use of the hot melt adhesive composition as defined in the present invention for bonding an elastic material between two separate substrates.

Another object of the present invention is a laminate comprising at least one elastic material and at least two substrates, said elastic material being inserted between two substrates and covered with the hot melt adhesive composition of the invention.

By "laminate" it is to be understood a multi-layer material, i.e. a material consisting in at least two layers.

A material is typically considered elastic when it is characterized as having a high percent elastic recovery (i.e., a low percent permanent set) after application of a biasing force. Ideally, elastic materials are characterized by a combination of three temperature independent properties, i.e., a low percent permanent set, and a low percent stress or load relaxation. That is, there should be, (1) no or low relaxing of the stress or unloading while the material is stretched, and (2) complete or high recovery to original dimensions after the stretching, biasing or straining is discontinued. Thus, an elastic material is typically a polymer which, free of diluents, has an elongation in excess of 100% independent of any crimp (when in fiber form) and which when stretched to twice its length, held for one minute, and then released, retracts to less than 1.5 times its original length within one minute of being released. Such polymers include, but are not limited to, natural rubber or synthetic rubbers, segmented polyurethanes (including polyurethaneureas) such as polyetherurethanes and polyesterurethanes, polyetheresters, elastomeric polyethylenes and polypropylenes, and polyetheramides.

Preferably, the elastic material is selected from the group consisting of elastomeric fiber, tape, film, strip, coating, ribbon and/or sheet, and, substantially linear ethylene polymers.

As examples of elastic material, mention may be made of spandex (e.g., Lycra® spandex and Lycra® XA, a spandex having little or no lubricating finish thereon).

The elastic material may comprise spandex or melt spun elastomers, or it may comprise natural or synthetic rubbers in the form of fibers or in the form of strips less than about 10 mm wide.

The U.S. International Trade Commission defines spandex as a manufactured fiber in which the fiber-forming substance is a long-chain synthetic polymer comprised of at least 85 percent by weight of a segmented polyurethane. Lycra® spandex is known to exhibit nearly ideal, temperature independent elastic properties.

Preferably, the elastic material(s) is(are) inserted between a first substrate selected from polyolefin films, such as polyethylene or polypropylene films, and a second substrate selected from non-woven materials, such as non-woven polypropylene or non-woven polyethylene.

Preferably, the elastic material(s) is(are) inserted between two substrates selected from non-woven materials, such as non-woven polypropylene or non-woven polyethylene.

Preferably, the laminate of the invention comprises at least two, preferably at least three elastic materials inserted between two substrates.

Preferably, the elastic material is in the form of a strand of elastic, having preferably a linear density ranging from 235 dtx to 1520 dtx.

The present invention also relates to a process for manufacturing the laminate according to the invention comprises the following steps:

- providing a first substrate,
- providing at least one elastic material,
- applying the hot melt adhesive composition according to the invention onto at least one elastic material,
- contacting the elastic material(s) covered with the hot melt adhesive composition with the first substrate,
- contacting the second substrate with the elastic material(s).
- compression between two rollers.

Preferably, the elastic material is stretched before application of the adhesive composition, preferably such that the length of the elastic ranges from 2 to 4 times its length at rest (i.e. without stretching), ideally the stretching is performed such that the length of the elastic becomes 3 times longer that the length of the elastic at rest.

Preferably, the hot melt adhesive composition is applied at a temperature ranging from 110°C to less than 180°C, preferably at a temperature ranging from 130 to 155°C, ideally at a temperature of approximately 145°C.

Preferably, the compression level of the laminates at the nip rolls is about 1 bar.

The hot melt adhesive composition of the invention may be applied onto the elastic material either by contact applications or by spraying applications.

The contact application uses a contact nozzle from which the adhesive composition may be applied onto the elastic material in a straight way. In the case wherein the elastic material is in the form of a strand, the hot melt adhesive composition may be applied onto the elastic material in a straight way along the strand. If there are several elastic strands in the laminate, the adhesive composition may be applied separately onto each strand. A same apparatus may comprise several nozzle in order to apply the hot melt adhesive composition simultaneously onto the several elastic strands. An example of process for applying the adhesive composition with a contact application is described in document US 2012/0258246.

An example of devices for the contact application is the Allegro® or SureWrap® nozzles from Nordson

According to this embodiment, the hot melt adhesive composition is applied at a rate ranging from 50 to 1000 m/min. Preferably, the amount of hot melt adhesive composition may range from 5 to 100 mg per meter of elastic strand, preferably from 10 to 30 mg/m, preferably from 15 to 25 mg/m of elastic strand. Preferably, the amount of hot melt adhesive composition is expressed per meter of elastic strand under stretch.

The present invention also relates to an article comprising the laminate as disclosed above. The article is preferably a disposable absorbent article, more preferably chosen from the group consisting of disposable diapers, training pants, adult incontinent products (pads or briefs), periodic care products (napkins or pads) and surgical masks, more preferably from the group consisting of adult incontinent products (pads or briefs) and periodic care products (napkins or pads). More preferably it is a disposable diaper.

All the description, embodiments, preferred embodiments defined above for the hot melt adhesive composition apply here for the disposable absorbent article without need to repeat it.

The ranges disclosed in this description include both the lower and the upper limit thereof. For example, the expressions "ranging from x to y" or "between x and y" comprises the limits x and y.

The following examples illustrate the invention without limiting it.

## EXAMPLES

The following materials were implemented:

- Vistamaxx™ 6502 (by ExxonMobil): metallocene isotactic polypropylene with random ethylene distribution (13 wt%) having a weight average molecular weight of about 119 000 g/mol, a melt index at 190°C and 2.16 kg (ASTM D1238) of about 21 g/10 min, a Vicat softening temperature of about 51°C and an enthalpy of fusion of about 9.8 J/g, non-amorphous single-site catalyzed polyolefin,
- Vistamaxx™ 8880 (by ExxonMobil): metallocene isotactic polypropylene with random ethylene distribution (6 wt%) having a weight average molecular weight of about 27 000 g/mol, a melting point of 96°C DSC, non-amorphous single-site catalyzed polyolefin,
- SUKOREZ® SU-210 (by KOLON): hydrogenated dicyclopentadiene/C5 hydrocarbon resin having a softening point of about 110°C, tackifying resin,
- Nyflex 223 (by NYNAS): naphthenic oil, plasticizer,
- Sarawax SX105 (by Shell): Fischer-Tropsch wax (CAS: 8002-74-2) having a drop melting point between 112°C and 118°C,
- POLYETHYLENE WAX LP1040T from SCG: refined polyethylene homopolymer wax derived from the unique HDPE process, having a drop melting point of 116°C,
- G1657 from KRATON is a hydrogenated styrene block copolymer SEBS comprising 30% of diblock and styrene content of 13%,
- PPA 300 from Clariant: amorphous metallocene-catalyzed propylene ethylene copolymer having a viscosity at 170°C between 100 and 300 mPa.s,
- Paraffin wax from Levita having a melting point between 64 to 68 °C,
- Irganox® 1010 (by BASF): pentaerythritol tetrakis[3-(3,5-di-tert-butyl-4-hydroxyphenyl)propionate] (CAS: 6683-19-8), antioxidant.

### Example 1 : Preparation of the adhesive compositions

The compositions of example 1 in Table 1 are individually prepared by simple mixing of its ingredients. Polymer(s), plasticizer(s) and stabilizer(s) are mixed together and heated at 150 °C until everything dissolved as a homogeneous mixture. Then, resin(s) are added at the same temperature until everything dissolved as a homogeneous mixture. At the end, the mixture is cooled down and collect to be used as it.

Table 1: Ingredients of compositions 1-5

| Composition | 1 (comp) | 2 (comp) | 3 (comp) | 4 (invention) | 5 (invention) |
|---|---|---|---|---|---|
| Vistamaxx™ 8880 | 17.6 | 16.3 | 17.6 | 17.6 | 17.6 |
| Vistamaxx™ 6502 | 20.0 | 18.4 | 20.0 | 20.0 | 20.0 |
| G1657 (Kraton) | - | 4.8 | - | - | - |
| SUKOREZ® SU-210 | 51.4 | 47.5 | 51.4 | 51.4 | 51.4 |
| Nyflex 223 | 10.0 | 9.0 | 6.0 | - | 7.0 |
| PPA 330 | - | - | - | 5.0 | - |
| Sarawax SX105 | - | 3.0 | - | 5.0 | - |
| LP-1040T | - | - | - | - | 3.0 |

(continued)

| Composition | 1 (comp) | 2 (comp) | 3 (comp) | 4 (invention) | 5 (invention) |
|---|---|---|---|---|---|
| Paraffin wax 64-68 | - | - | 4.0 | - | - |
| Irganox® 1010 | 1.0 | 1.0 | 1.0 | 1.0 | 1.0 |
| Total | 100 | 100 | 100 | 100 | 100 |

**Example 2 : preparation of an elastic laminate and performances**

A laminate is prepared as follows. Use is made, as a laminating device, of a machine operating continuously at a line speed of approximately 400 m/minute, which machine is sold by NORDSON under the name of Coater CTL 4400.

In this machine, the coating nozzle is an Allegro nozzle.

The two substrates employed are:

- a 13 g/m$^2$ PE film breathable which has a width of 20 cm, untreated side and
- a 15 g/m$^2$ spunbond hydrophobic nonwoven sheet of the same width, which is composed of fibers of polypropylene (PP)

Elastic used: Elastics brand having 800 dtex (Lycra)

The hot melt adhesive was applied to elastic strands by Allegro coating using intermittent mode after elastics were stretched with 300% elongation. Then, applied to a nonwoven fabric as primary substrate and then PE film with an open time of 0.26 seconds and 1 bar compression. The coating temperature was set to 140°C, with an add-on approximately 15-25 mg/lm/strand on elastic strands.

***Creep resistance measured initially and after aging at 55°C***

The laminates obtained are unrolled, relaxed and left for 24 hours at 23°C and at 55% relative humidity.

Creep resistance test was carried out on laminates prepared above. The laminates comprise an elastic strand and non-elastic substrates. A segment of the laminate about 350 mm is stretched completely and is securely attached to a piece of Plexiglas board except the elastic strands edges that remain free to move. Previously, elastic strands have been marked with a color pencil under relaxed state at the beginning and end of laminate wrinkles. The test samples (laminates) were placed into the oven at 38°C for 4 hours. This oven is located in a climate laboratory at 23°C/55% relative humidity. Under these conditions, the marks of elastic strands under stretch can retract to a certain distance. The distance between the marks of the elastic strands is measured at 23°C when removed after the 4 hours spent in the oven at 38°C. The ratio of the final length to the initial length, defined as the creep retention and expressed in percentage (%), is a measure of the ability of the adhesive to hold the elastic strands.

$$\% \text{ Creep retention} = [\text{Final length})/ \text{Initial Length}]^* 100$$

The higher is the %creep retention, the better. A % creep retention lower than 80% is not acceptable.

The Creep retention after 4 weeks at 55°C (ageing test for creep), is measured by repeating the above protocol except that the assembly obtained after lamination is aged during 4 weeks at 55°C, then let at 23°C after 24h before to relaunch the test 4h at 38°C, is expressed in %.

**Loss % of melt enthalpy**

Melt enthalpy measured by DSC at first heat was carried out on composition dog bones prepared following the protocol disclosed below.

At initial, the hot-melt compositions are melt in oven at 150°C under vacuum to remove air bubbles during 30 minutes. Then the melted compositions are used to fill in a mold of silicon dog bones. Wait at least one week at 23°C to let the hot-melt composition dog bones (7.5x1.5x0.3 cm) fully cooled down and thoroughly crystallized.

Then cut 10mg of dog bone to launch DSC analysis. The melt enthalpy (at first heat) is measured by DSC with the sample which is first heated from -70°C to 200°C at 10°C/min.

The Loss percentage of melt enthalpy is calculated as follows:

% Loss of melt enthalpy = [(Initial melt enthalpy-Aged melt enthalpy)/Initial melt enthalpy] * 100

wherein:

- the initial melt enthalpy corresponds to the melt enthalpy measured by DSC on a sample not being submitted to the ageing test (explained below);
- the aged melt enthalpy corresponds to the melt enthalpy measured by DSC on a sample which has been submitted to the ageing test: at 55°C for 4 weeks in an oven at 55% Relative Humidity (±5%), then let 24h at 23°C, then 1 hour at 38°C, removed from the oven, left cooling down at 23°C and 55% Relative Humidity (±5%) for 30 minutes before to perform the DSC analysis.

The lower is the %Loss of melt enthalpy between initial and aged conditions, the better. A % Loss of melt enthalpy higher than 10% is not acceptable.
The results are gathered in the following table:

| **Composition** | **1 (comp)** | **2 (comp)** | **3 (comp)** | **4 (invention)** | **5 (invention)** |
|---|---|---|---|---|---|
| Viscosity at 177°C (mPa.s) | 6400 | 8700 | 6600 | 7000 | 6400 |
| % initial creep Retention (4h, 38°C) | 95% | 96 % | 91% | 95% | 97 % |
| % aged creep Retention after 4 weeks 55°C (4h, 38°C) | 35% | 75% | 33% | 91% | 89% |
| Initial melt enthalpy (J/g) | -15 | Not measured | -25.0 | -21 | -17 |
| Aged melt enthalpy after submitted to ageing test | - 8 | Not measured | -20 | -21 | -16 |
| % Loss of melt enthalpy | - 47 | Not measured | -20 | 0 | -6 |

The viscosity of each composition was measured at 177°C according to the standard ASTM D3236, using a Brookfield viscometer (spindle 27).
Considering the loss percentage of melt enthalpy for first heat between initial and aged conditions, the compositions 4 and 5 (invention) advantageously provide the lower loss of melt enthalpy that enables to keep an excellent creep retention, in particular less than 10% after ageing 1 month at 55°C. On the contrary, comparative compositions 1 and 3 exhibit loss percentage of melt enthalpy after ageing greatly higher than 10% (respectively -52% and -20%): they lead to a poor creep retention after ageing (respectively 35% and 33%).

## Claims

**1.** Hot melt adhesive composition comprising:

- a first non-amorphous single-site catalyzed polyolefin (PO1) having an average molecular weight ranging from 10 000 g/mol to 99 000 g/mol, and an enthalpy of fusion ranging from 30 J/g to 100 J/g;
- a second non-amorphous single-site catalyzed polyolefin (PO2) having an average molecular weight greater than or equal to 100 000 g/mol, and an enthalpy of fusion ranging from 8 J/g to 30 J/g;
- a wax having a drop melting point ranging from 70°C to 180°C;

wherein the composition has a loss percentage of melt enthalpy between initial and after ageing lower than 10%, wherein the composition is free of hydrogenated styrene block copolymer.

**2.** Hot melt adhesive composition according to claim 1, **characterized in that** said hot melt is free of amorphous polyolefin having an average number molecular weight (Mn) higher than 6000 g/mol.

**3.** Hot melt adhesive composition according to anyone of claim 1 or 2, **characterized in that** said hot melt is free of amorphous polyolefin having an average number molecular weight (Mn) higher than 3000 g/mol.

**4.** Hot melt adhesive composition according to anyone of claims 1 to 3, wherein PO1 and PO2 are metallocene-catalyzed.

5. Hot melt adhesive composition according to anyone of claims 1 to 4, wherein PO1 is a homopolymer or copolymer of propylene.

6. Hot melt adhesive composition according to anyone of claims 1 to 5, wherein PO1 is a copolymer of ethylene and propylene comprising more than 60 % by weight of propylene units and between 1 % and 40 % by weight of ethylene units with respect to the weight of the PO1, preferably more than 70 % by weight of propylene units and between 2 % and 30 % by weight of ethylene units, more preferably more than 80 % by weight of propylene units and between 4 % and 20 % by weight of ethylene units, even more preferably more than 85 % by weight of propylene units and between 6 % and 15 % by weight of ethylene units.

7. Hot melt adhesive composition according to anyone of claims 1 to 6, wherein PO1 has a weight average molecular weight ranging from 10 000 g/mol to 75 000 g/mol, preferably from 10 000 g/mol to 50 000 g/mol, and even more preferably from 10 000 g/mol to 30 000 g/mol.

8. Hot melt adhesive composition according to anyone of claims 1 to 7, wherein PO1 has an enthalpy of fusion ranging from 30 J/ to 80 J/g, preferably from 32 J/g to 60 J/g, more preferably from 35 J/g to 50 J/g.

9. Hot melt adhesive composition according to anyone of claims 1 to 8, wherein the PO1 content ranges from 8 % to 50 % by weight with respect to the total weight of the hot melt adhesive composition, preferably from 10 % to 40 % by weight, more preferably from 10 % to 25 % by weight.

10. Hot melt adhesive composition according to anyone of claims 1 to 9, wherein PO2 is a copolymer of ethylene and propylene comprising more than 60 % by weight of propylene units and between 1 % and 40 % by weight of ethylene units with respect to the weight of the PO2, preferably more than 70 % by weight of propylene units and between 2 % and 30 % by weight of ethylene units, more preferably more than 80 % by weight of propylene units and between 4 % and 20 % by weight of ethylene units, even more preferably more than 85 % by weight of propylene units and between 6 % and 15 % by weight of ethylene units.

11. Hot melt adhesive composition according to anyone of claims 1 to 10, wherein PO2 has an enthalpy of fusion ranging from 8 J/g to 20 J/g, preferably from 9 J/g to 15 J/g.

12. Hot melt adhesive composition according to anyone of claims 1 to 11, wherein the weight ratio PO1 : PO2 ranges from 9 : 1 to 1 : 9, preferably from 4 : 6 to 6 : 4.

13. Hot melt adhesive composition according to anyone of claims 1 to 12, wherein the total amount of the sum of PO1 and PO2 in the hot melt adhesive composition is greater than or equal to 20 wt%, more preferably greater than or equal to 30 wt%, even more preferably it ranges from 35 wt% to 80 wt% with respect to the total weight of the composition.

14. Hot melt adhesive composition according to anyone of claims 1 to 13, wherein the wax is a polyolefin wax or a Fischer-Tropsch wax.

15. Hot melt adhesive composition according to anyone of claims 1 to 14, wherein it comprises from 1% to 15% by weight of a wax, preferably from 2% to 10% by weight.

16. Hot melt adhesive composition according to anyone of claims 1 to 15, **characterized in that** it further comprises a plasticizer, preferably selected from naphthenic oils, paraffinic oils, olefin plasticizers, and mixtures thereof, preferably from naphthenic oils, paraffinic oils, and mixtures thereof.

17. Hot melt adhesive composition according to anyone of claims 1 to 16, wherein it has a loss percentage of melt enthalpy at first heating between initial and after ageing lower than 8%.

18. Hot melt adhesive composition according to anyone of claims 1 to 17, wherein it has a Brookfield viscosity at 177°C of from about 1000 to about 20 000 mPa.s, preferably from about 3000 to about 10 000 mPas, and more preferably from about 5000 to about 7000 mPas.

19. Hot melt adhesive composition according to anyone of claims 1 to 18, **characterized in that** it has a creep retention after ageing of the hot melt at 55°C during 4 weeks higher than or equal to 85%, preferably higher than or equal to 88%.

**20.** Use of the hot melt adhesive composition according to anyone of claims 1 to 19, as construction adhesive, core adhesive or elastic attachment adhesive, preferably as elastic attachment adhesive.

**21.** Laminate comprising at least one elastic material and at least two substrates, said elastic material being inserted between two substrates and covered with the hot melt adhesive composition according to anyone of claims 1 to 19.

Europäisches Patentamt
European Patent Office
Office européen des brevets

# EUROPEAN SEARCH REPORT

Application Number
EP 24 30 6630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2022/113905 A1 (HENKEL AG & CO KGAA [DE]) 2 June 2022 (2022-06-02)<br>* claim 1 *<br>* example 6; table 1 *<br>* paragraphs [0002], [0057], [0060] *<br>----- | 1-21 | INV.<br>C09J123/14 |
| X<br><br>A | EP 3 707 219 B1 (BOSTIK INC [US])<br>14 August 2024 (2024-08-14)<br>* claim 1 *<br>* examples 1-3; table 1 *<br>* paragraphs [0001], [0070], [0071] *<br>----- | 1,4-21<br><br>2,3 | |
| A | US 2024/318047 A1 (HAMANN RICHARD E [US] ET AL) 26 September 2024 (2024-09-26)<br>* claim 1 *<br>* paragraph [0001] *<br>----- | 1-21 | |
| A | EP 3 898 866 B1 (BOSTIK SA [FR])<br>28 February 2024 (2024-02-28)<br>* paragraph [0068] *<br>----- | 1-21 | |
| | | | TECHNICAL FIELDS SEARCHED (IPC) |
| | | | C09J<br>C08L |

The present search report has been drawn up for all claims

1

| Place of search | Date of completion of the search | Examiner |
|---|---|---|
| Munich | 19 February 2025 | van Bergen, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 30 6630

This annex lists the patent family members relating to the patent documents cited in the above-mentioned European search report. The members are as contained in the European Patent Office EDP file on
The European Patent Office is in no way liable for these particulars which are merely given for the purpose of information.

19-02-2025

| Patent document cited in search report | Publication date | Patent family member(s) | Publication date |
|---|---|---|---|
| WO 2022113905 A1 | 02-06-2022 | JP 2022083775 A | 06-06-2022 |
| | | WO 2022113905 A1 | 02-06-2022 |
| EP 3707219 B1 | 14-08-2024 | AU 2018366221 A1 | 21-05-2020 |
| | | BR 112020009241 A2 | 20-10-2020 |
| | | CA 3081356 A1 | 16-05-2019 |
| | | CN 111566178 A | 21-08-2020 |
| | | EP 3707219 A1 | 16-09-2020 |
| | | ES 2995481 T3 | 10-02-2025 |
| | | JP 7256799 B2 | 12-04-2023 |
| | | JP 2021502452 A | 28-01-2021 |
| | | PL 3707219 T3 | 04-11-2024 |
| | | US 2019144719 A1 | 16-05-2019 |
| | | WO 2019094659 A1 | 16-05-2019 |
| US 2024318047 A1 | 26-09-2024 | AU 2022227670 A1 | 07-09-2023 |
| | | BR 112023017095 A2 | 21-11-2023 |
| | | CA 3211851 A1 | 01-09-2022 |
| | | CN 114958249 A | 30-08-2022 |
| | | CN 117730129 A | 19-03-2024 |
| | | EP 4298175 A1 | 03-01-2024 |
| | | JP 2024543282 A | 21-11-2024 |
| | | US 2024318047 A1 | 26-09-2024 |
| | | WO 2022182851 A1 | 01-09-2022 |
| EP 3898866 B1 | 28-02-2024 | BR 112021011214 A2 | 24-08-2021 |
| | | CA 3122163 A1 | 25-06-2020 |
| | | CN 113412315 A | 17-09-2021 |
| | | EP 3670625 A1 | 24-06-2020 |
| | | EP 3898866 A1 | 27-10-2021 |
| | | JP 7450624 B2 | 15-03-2024 |
| | | JP 2022514369 A | 10-02-2022 |
| | | KR 20210104102 A | 24-08-2021 |
| | | US 2022056309 A1 | 24-02-2022 |
| | | WO 2020126506 A1 | 25-06-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017058981 A
- US 20120258246 A


### Non-patent literature cited in the description


- *CHEMICAL ABSTRACTS*, 41556-26-7
- *CHEMICAL ABSTRACTS*, 82919-37-7
- *CHEMICAL ABSTRACTS*, 8002-74-2
- *CHEMICAL ABSTRACTS*, 6683-19-8